# EUROPÄISCHE PATENTSCHRIFT

(11) **EP 0 979 135 B1**
(45) Veröffentlichungstag und Bekanntmachung des Hinweises auf die Patenterteilung: **23.07.2003**
(21) Anmeldenummer: 98922764.0
(22) Anmeldetag: 23.04.1998
(51) Int. Cl.: B01D 53/32, F01N 3/02, F01N 3/08

(54) **VORRICHTUNG UND VERFAHREN ZUR ZERSETZUNG VON SCHADSTOFFEN IN ABGASEN VON VERBRENNUNGSPROZESSEN**
DEVICE AND METHOD FOR DECOMPOSING HARMFUL SUBSTANCES CONTAINED IN FLUE GAS
DISPOSITIF ET PROCEDE DE DECOMPOSITION DE SUBSTANCES NOCIVES CONTENUES DANS DES GAZ DE COMBUSTION

(30) Priorität: 28.04.1997 DE 19717889; 28.04.1997 DE 19717890
(43) Veröffentlichungstag der Anmeldung: 16.02.2000
(73) Patentinhaber: Institut für Niedertemperatur-Plasmaphysik E.V. an der Ernst-Moritz-Arndt-Universität Greifswald, 17489 Greifswald (DE)
(72) Erfinder: BEST, Walter, D-52351 Düren (DE)
(74) Vertreter: Blum, Hans-Werner
(86) Internationale Anmeldenummer: EP9802394
(87) Internationale Veröffentlichungsnummer: WO98048922

(56) Entgegenhaltungen:
- EP-A- 0 366 876
- EP-A- 0 585 047
- EP-A- 0 627 263
- EP-A- 0 659 465
- DE-A- 3 936 421
- DE-A- 4 446 280

## Beschreibung

Die Erfindung betrifft eine Vorrichtung und ein Verfahren zur Zersetzung von Schadstoffen in Abgasen von Verbrennungsprozessen.

Hierzu gehören beispielsweise giftige Schadstoffe wie NOₓ in Abgasen aus Verbrennungsprozessen, insbesondere in Auspuffgasen von Kraftfahrzeugen oder stationären Motoren und von Rauchgasen von mit fossilen Brennstoffen betriebenen Kraftwerken.

Ein anderes Einsatzgebiet der Erfindung ist die Zersetzung von rußhaltigen Schadstoffen in Abgasen aus Verbrennungsprozessen, insbesondere in Auspuffgasen von Dieselkraftfahrzeugen oder stationären Motoren.

Neben den traditionellen Verfahren zur Beseitigung von giftigen und von rußhaltigen Schadstoffen aus Verbrennungsprozessen ist auch bereits vorgeschlagen worden, diese Abgase in einer dielektrisch behinderten Entladung zu behandeln.

Das Phänomen der dielektrisch behinderten Entladung, oft auch als stille Entladung oder Wechselspannungsentladung zwischen isolierten Elektroden bezeichnet, ist seit längerem bekannt. Diese Entladungsform zeichnet sich dadurch aus, daß sie bei Normal- und Überdruck betrieben werden kann. Der Druckbereich für den Betrieb solcher Entladungen reicht von einigen 10 mbar bis zu einigen bar und der Elektrodenabstand liegt zwischen 1/10 mm bis einigen mm. Dielektrisch behinderte Entladungen sind dadurch gekennzeichnet, daß mindestens ein Dielektrikum zwischen den Elektroden oder auf einer der Elektroden angeordnet ist. Die Entladung wird mit Wechselspannungen im Bereich von einigen Hz bis zu mehreren 100 kHz betrieben, wobei sich bei großflächigen Elektroden zumeist statistisch verteilt zahlreiche kleine Entladungsflächen, auch Filamente genannt, ausbilden. Durch die Isolation begrenzt sich die Entladung nach dem Durchbruch selbständig und die Entladungsdauer beträgt in der Regel nur Bruchteile der Halbperiodendauer. Dadurch kommt es zu keiner nennenswerten Gasaufheizung durch das Plasma.

Bekannt ist ferner, daß mit solcherart Plasmen chemische Verbindungen erzeugt oder zerstört werden können. Beiträge zu diesem Themenkreis sind beispielsweise enthalten in: "Proceedings of the NATO Advanced Research Workshop on Non-Thermal Plasma Techniques for Pollution Control", Cambridge, Sept. 1992, herausgegeben von B. Penetrante und S. Schultheis, "Non-Thermal Plasma Techniques for Pollution Control", Springer-Verlag Berlin 1993.

In technischen Lösungen ist die dielektrisch behinderte Entladung Teil eines Plasmareaktors. In der Regel handelt es sich dabei um ein großvolumiges und, da die dielektrisch behinderte Entladung in ihrer Elektrodenfläche beliebig skalierbar ist, großflächiges Gebilde, so daß auch große Volumenströme behandelt werden können. Die Formgebung ist entweder planar oder koaxial. Eine entsprechende Vorrichtung ist z. B. in der DE-OS 37 08 508 beschrieben.

Es wurde auch vorgeschlagen, beispielsweise in DE-OS 195 25 754 A1 und DE-OS 195 25 749 A1, das Reaktorvolumen in räumlich periodische Strukturen zu unterteilen, so daß in Flußrichtung Entladungszonen und entladungsfreie Zonen entstehen. Die Formgebung weist dabei im Bereich der Entladungszonen Mittel zur Feldüberhöhung auf. In DE-OS 195 25 749 A1 ist dabei femer vorgesehen, chemisch wirksame Materialien im Bereich der Oberflächen der Strukturen einzubringen.

In der DE-OS 195 34 950 A1 wird ein Reaktor beschrieben, der aus mehreren Modulen mit einer Vielzahl von parallelen und räumlich voneinander getrennten Kanälen in einem dielektrischen Körper mit darin eingebrachten Elektroden besteht.

Eine weitere Version für den Aufbau einer dielektrisch behinderten Entladung ist in der Patentschrift DE 43 02 456 C1 vorgeschlagen worden. Dabei besteht mindestens eine Elektrode aus einem spannungsangeregten Plasma.

Eine andere Möglichkeit des Reaktoraufbaus wird in der US-PS 4 954 320 benannt. Die Vorrichtung enthält metallische Elektroden, zwischen die eine lose Schüttung von dielektrischen Isolationskörpern, z. B. Keramikkugeln, eingebracht ist. Eine ähnliche Variante stellt die Vorrichtung nach DE-OS 44 16 676 A1 dar.

Bei dieser ist der Raum zwischen plattenförmigen Elektroden mit Isolierstoffkörpern ausgefüllt, die auf ihrem gesamten Querschnitt von Kanälen durchzogen sind oder Poren enthalten. Zur Beeinflussung der plasmachemischen Reaktionsabläufe wurde auch vorgeschlagen, dem zu behandelnden Abgas bestimmte Additive zuzuführen. So wird beispielsweise in der DE 42 31581 A1 einer Vorrichtung zur Abgasreinigung eine Zuführung für Beimischungen zugeordnet.

Bei dem Stand der Technik strömt der zu behandelnde Abgasstrom längs zu den parallel zueinander verlaufenden Elektrodenflächen durch den Entladungsraum. Er tritt an einem Ende des durch die zwei Elektroden gebildeten Entladungsraumes ein und am anderen Ende aus, auch unabhängig davon, ob zwischen den Elektroden eine Schüttung von Isolierstoffkörpern eingebracht ist. Das Abgas hat in dem Plasmabehandlungsraum eine Verweildauer entsprechend der eingestellten oder der anfallenden Durchflußmenge und der sich aus der Querschnittsfläche des Behandlungsraumes ergebenden Strömungsgeschwindigkeit. Da der Elektrodenabstand aus physikalischen Gründen nur in begrenztem Maß verbreitert werden kann, läßt sich die Strömungsgeschwindigkeit für eine optimale Behandlung nur verringern, wenn der Entladungsraum in seiner Querausdehnung stark verbreitert wird bzw. eine Vielzahl von Parallelschaltungen solcher Entladungsräume erfolgt, was zu einem großen Bauvolumen führt. Dies bewirkt ferner einen erhöhten Energieverbrauch als auch eine Herabsetzung der Effektivität des Reinigungsprozesses hinsichtlich der chemischen Reaktionsabläufe. Außerdem können so weitere Reaktionen initiiert werden, wodurch andere schädliche Substanzen oder unerwünschte Nebenprodukte entstehen. Ferner muß in Vorrichtungen, die nach dem Stand der Technik aufgebaut sind, bei mit Ruß beladenen Abgasen solange eine Behandlung erfolgen, bis die Rußpartikel komplett zu CO₂ und CO umgesetzt oder anderweitig gebunden sind. Bei wechselnder Last, Strömungsgeschwindigkeit und letztlich unterschiedlicher Beladung des Abgases mit Ruß, muß die Längenausdehnung so bemessen sein, daß auch im ungünstigsten Fall eine komplette Zersetzung erfolgt. Unter Praxisbedingungen wäre eine unangemessene Längenausdehnung des Behandlungsraumes erforderlich und zudem die Effektivität des Reinigungsprozesses für andere Schadstoffkomponenten durch die unnötig lange Behandlungsdauer herabgesetzt. Weiterhin erhöht sich dadurch auch der Energieverbrauch.

Zwei weitere Möglichkeiten von Anordnungen sind in EP 03 66 876 A1 vorgesehen. In einer Ausführung ist senkrecht zur in einen Kanal einströmenden Gasflußrichtung eine Entladungskonfiguration eingebracht. Bei dieser ist in Strömungsrichtung die erste Elektrode maschenförmig oder mit Löchern versehen, so daß Gas in den dahinter befindlichen Entladungsraum einströmen kann. Zur Abströmung des Gases besitzt die zweite Elektrode ein poröses Dielektrikum. In einer zweiten Variante besitzen die einen Kanal ausbildenden Elektroden Löcher oder Bohrungen in den Seitenwänden.

Bei dem Stand der Technik mit einer Entladungskonfiguration senkrecht zur Strömungsrichtung des Abgases ergeben sich nur sehr kleine Flächen für eine Filterung von mit Ruß beladenen Abgasen, so daß eine für praktische Anordnungen ungünstige große Parallelschaltung von vielen solcher Kanäle mit Entladungskonfiguration erfolgen müßte. Auch für die Behandlung von gasförmigen Bestandteilen besteht ein ähnliches Problem, da eine Mindestverweildauer im Plasma erforderlich ist. Zur Verbesserung des Wirkungsgrades sind deshalb zusätzliche Einrichtungen für eine Beimischung von Ammoniak zum Abgas erforderlich, was einen großen Aufwand darstellt. Ferner ist bei dieser Art von Anordnung ein poröses Dielektrikum erforderlich. Das senkt aber drastisch die Durchschlagsfestigkeit, im Fall einer Oxidkeramik als Isolator beispielsweise von 22 kV/mm auf 5,6 kV/mm, so daß eine dickere Isolationsschicht eingesetzt werden muß, was zu höheren Spannungen und größeren Energieverlusten führt. Durch die höheren Spannungen verteuert sich ferner die Energieversorgung. Bei der anderen Variante mit Löchern oder Bohrungen in den Seitenwänden von Elektroden wird Ruß nicht genügend aus dem Abgas zurückgehalten und im Plasma zersetzt. Für einen ausreichenden Abbau im Plasma wäre eine Vielzahl von Passagen durch einen solcherart aufgebauten Behandlungsraum erforderlich, was zu einer unangemessen großen Bauweise führen würde. Im Falle der isolierten Elektrode sind Löcher oder Bohrungen im Dielektrikum, wodurch die Gefahr des Kurzschlusses besteht, unabhängig von der Zusammensetzung des Abgases. Dadurch wird ferner der Arbeitsbereich des Reaktors eingeschränkt, da keine größere Leistung eingestellt werden kann.

Aufgabe der Erfindung ist es daher, eine Vorrichtung zu schaffen und ein dazugehöriges Verfahren anzugeben, wodurch der Abbau von Schadstoffen, insbesondere NOₓ und Ruß, aus Abgasen verbessert wird. Dabei soll bei allen betriebsbedingten Schwankungen des Rußanteils im zu behandelnden Abgas ein wirtschaftliches und sicheres Arbeiten ermöglicht werden. Erfindungsgemäß wird die Aufgabe durch die Merkmale der Ansprüche 1 und 6 gelöst. Vorteilhafte Ausgestaltungen ergeben sich aus den Unteransprüchen.

Nach der Erfindung wird das Abgas in einen nach dem Prinzip der dielektrisch behinderten Entladung aufgebauten Behandlungsraum eingeleitet, bei dem eine der diesen Behandlungsraum ausbildenden Elektroden porös und leitfähig ist und das Abgas durch diese poröse Elektrode strömt. Die poröse Elektrode ist so gestaltet, daß sie für gasförmige Bestandteile durchlässig ist, aber für die Rußpartikel als Filter wirkt und diese zurückhält. Die Anordnung der porösen Elektrode ist längs der Strömungsrichtung.

Bei der erfindungsgemäßen Vorrichtung hat es sich als vorteilhaft erwiesen, daß mit der Durchleitung des Abgasstromes durch die poröse Elektrodenfläche eine Beruhigung des Gasstromes erfolgt, da die Elektrodenfläche immer größer ist als die Querschnittsfläche des Entladungsraumes oder die Querschnittsfläche des Strömungskanales, so daß die Strömungsgeschwindigkeit im Bereich der porösen Elektrode drastisch herabgesetzt ist und so eine effektive Behandlung erfolgen kann. Weiterhin wird eine kompakte Bauweise der Vorrichtung ermöglicht und der Energieeinsatz vermindert. Vorteilhaft ist weiterhin, daß so unabhängig von unterschiedlicher Beladung des Abgases mit Ruß eine Abgabe des Rußes an die Umgebungsatmosphäre vermieden wird. Durch die Zersetzung von Ruß im Plasma ist ferner auch keine hohe Temperatur des Abgases oder eine Einrichtung zur Aufheizung erforderlich, um den Kohlenstoff zur Reaktion zu bringen. Als weiterer Vorteil hat sich gezeigt, daß die parallel aus der Zersetzung von giftigen Bestandteilen des Abgases, beispielsweise NO, freigesetzten Bestandteile durch den Kohlenstoff gebunden werden und so eine Aufoxidation anderer unerwünschter Zwischenprodukte eingeschränkt wird. Durch den Einsatz einer porösen Elektrode im Behandlungsraum wird ferner erreicht, daß andere schädliche Beiprodukte des Abgases, insbesondere in Form von Aerosolen, weitgehend zurückgehalten und zersetzt werden.

Bei dem zugehörigen Verfahren wird der zu behandelnde Abgasstrom in einen der erfindungsgemäß aufgebauten Räume eingeleitet und es erfolgt eine Plasmabehandlung des Abgases vor dem Durchströmen durch die Elektrodenwand in einen oder mehrere benachbarte Räume. Der benachbarte Raum kann seinerseits auch als eine Konfiguration zum Betreiben einer dielektrisch behinderten Entladung ausgelegt sein, so daß in diesem eine weitere Zersetzung der zuvor im ersten Behandlungsraum gebildeten Zwischenprodukte erfolgt. Die Behandlung kann gegebenenfalls in weiteren benachbarten Räumen fortgesetzt werden. Vorteilhaft ist, daß so stufenweise eine Behandlung des Abgases erfolgen kann und auf diese Art komplexe Reaktionen der Ausgangsprodukte mit den Abbauprodukten eingeschränkt werden. Auf diese Weise kann die poröse Elektrode auch ein oder mehrmals zur Beruhigung des Gasstromes genutzt werden.

An Hand von Ausführungsbeispielen soll die Erfindung näher erläutert werden. Die Ausführungsbeispiele 1a bis 3 betreffen eine erfindungsgemäße Vorrichtung und das Verfahren zur Zersetzung von giftigen Schadstoffen in Abgasen, die Ausführungsbeispiele 4 bis 6 eine Vorrichtung und das Verfahren zur Zersetzung von rußhaltigen Schadstoffen in Verbrennungsabgasen. Es zeigen:
- Fig. 1a: den prinzipiellen Aufbau einer Vorrichtung mit einer porösen Elektrode,
- Fig. 1b: den prinzipiellen Aufbau einer Vorrichtung mit einer aus zwei Teilen bestehenden porösen Elektrode,
- Fig. 2: den Schnitt durch eine koaxiale Ausführung der Vorrichtung,
- Fig. 3: den Schnitt durch eine Vorrichtung mit mehreren Reaktionsräumen,
- Fig. 4: schematisch das Prinzip der Vorrichtung,
- Fig. 5: den prinzipiellen Aufbau mit einer aus zwei Teilen bestehenden porösen Elektrode und
- Fig. 6: den Schnitt durch eine Ausführung mit unterschiedlicher Elektrodenformgebung.

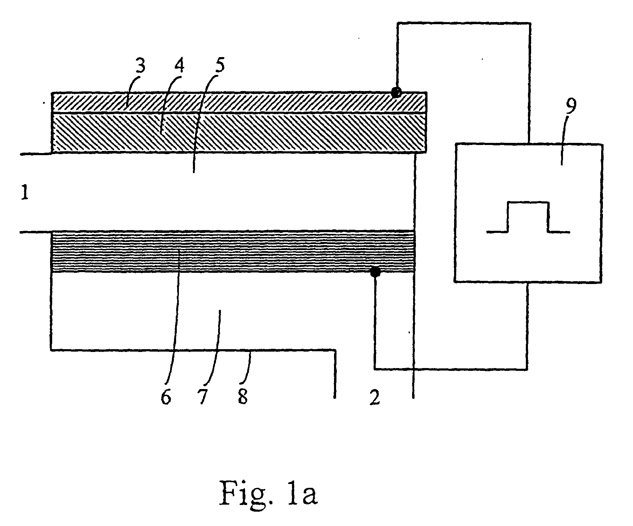

Die Fig. 1a verdeutlicht den prinzipiellen Aufbau einer Vorrichtung schematisch. Diese besitzt einen Gaseinlaß 1 und einen Gasauslaß 2, wobei Gaseinlaß und Gasauslaß auch vertauscht sein können, ohne das erfindungsgemäße Prinzip zu verändern. Durch ein elektrisch leitendes Material 3 und einem darauf befindlichen Isolationsmaterial 4 ist eine isolierte Elektrode gebildet. Dieser gegenüber angeordnet ist eine poröse Elektrode 6, die elektrisch leitfähig ist. Zwischen diesen Elektroden ist ein Gasraum als Behandlungsraum 5 ausgebildet, in welchem bei Anlegen einer Wechselspannung an die Elektroden mit einer Wechselspannungsversorgung 9 eine Gasentladung betrieben werden kann. Die Vorrichtung wird von einem Gehäuse 8 begrenzt. Zwischen Gehäuse 8 und der porösen Elektrode 6 ist ein Gasraum 7 zur Aufnahme des zugeführten oder behandelten Gases ausgebildet. Der Gasstrom wird durch die so gebildete Vorrichtung geleitet, insbesondere durch die poröse Elektrode 6, und erfährt dort beim Durchtritt eine Beruhigung.

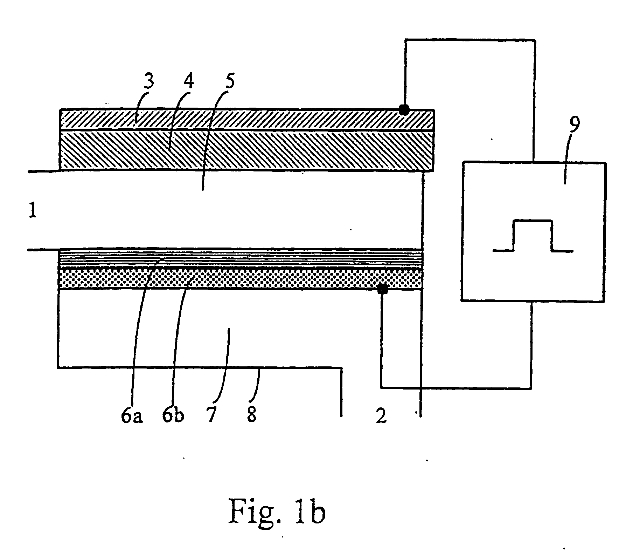

An Stelle der porösen elektrisch leitfähigen Elektrode 6 kann aber auch ein elektrisch nicht leitfähiges Material verwendet werden. In diesem Fall muß die poröse Elektrode 6 als eine isolierte Elektrodenkonfiguration ausgebildet sein, die sich aus zwei Bestandteilen zusammensetzt. Ein solcher Fall ist in der Fig. 1b veranschaulicht. Bei sonst gleichem Aufbau der Vorrichtung wie zuvor, besteht die poröse Elektrode aus einer elektrisch nicht leitenden Schicht 6a und einer leitenden Schicht 6b, an die eine Seite der Wechselspannungsversorgung 9 angeschlossen werden kann. Die elektrisch nicht leitende Schicht 6a ist dabei auf der Seite des Behandlungsraumes 5 angeordnet und die leitende Schicht 6b auf der Seite des Gasraumes 7. Auf diese Art ist zusammen mit der isolierten Elektrode, bestehend aus 3 und 4, eine dielektrisch behinderte Entladungskonfiguration mit zwei isolierten Elektroden ausgebildet.

Bei solcher Anordnung kann in einer anderen Ausführung auch auf die Isolation 4 verzichtet werden, so daß die dielektrisch behinderte Entladung zwischen dem elektrisch leitenden Material 3 und der aus den Bestandteilen 6a und 6b gebildeten porösen Elektrode ausgebildet werden kann. Die verschiedenen Schichten 6a und 6b der porösen Elektrode können beispielsweise aus unterschiedlich dotiertem SiC bestehen. Es ist aber nicht zwingend notwendig, den elektrisch leitenden Teil 6b aus einem porösen Material zu fertigen. Die elektrisch leitfähige Schicht 6b kann auch aus einem nicht porösen Material bestehen, das als eine gitter- oder lochförmige Struktur ausgeformt ist, damit das Gas dort ungehindert hindurchtreten kann.

Zur Unterstützung von plasmachemischen Reaktionsabläufen kann die Elektrode 6 auch mit einem katalytisch wirkenden Material infiltriert sein, wobei zum erfindungsgemäßen Gebrauch die Porösität erhalten bleiben muß.

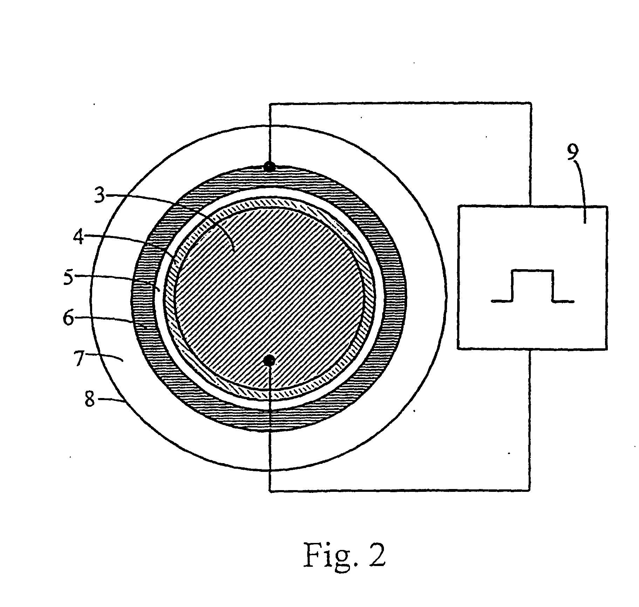

In Fig. 2 ist der Schnitt durch eine koaxiale Ausführung einer Vorrichtung gezeigt. Darin bilden ein elektrisch leitendes Material 3 und ein Isolationsmaterial 4 zusammen eine koaxiale, zylindrische isolierte Elektrode. Diese zylindrische isolierte Elektrode ist von einem Rohr 6 aus einem porösen Material mit elektrisch leitfähigen Eigenschaften umgeben, welches als Gegenelektrode dient, wobei durch hier nicht näher eingezeichnete Abstandshalter ein Gasraum zwischen den beiden Elektroden als Behandlungsraum 5 fixiert wird, in dem eine Gasentladung betrieben werden kann. Ein Gehäuse 8 schließt die Anordnung mit einem Gasraum 7 zur Aufnahme und Verteilung des Gases ein. Die Zufuhr des zu behandelnden Gases erfolgt bei einer Verfahrensweise, insbesondere wenn im Abgas keine Partikel wie Staub oder Ruß enthalten sind, über den Gasraum 7 durch einen hier nicht dargestellten geeigneten Gaseinlaß. Das Gas strömt dann durch die poröse Elektrode 6 in den Behandlungsraum 5, in welchem eine Plasmabehandlung erfolgt. Die Plasmabehandlung wird wieder über eine Wechselspannungsversorgung 9 herbeigeführt. Der Behandlungsraum ist nach außen hin mit einem geeigneten Gasauslaß versehen, durch welchen das behandelte Gas abgeführt werden kann.

Ohne das erfindungsgemäße Prinzip zu ändern, kann aber auch die Gaszufuhr über den Behandlungsraum 5 vorgenommen werden, in welchem dann zuerst eine Plasmabehandlung erfolgt. Dabei wird das Gas durch die poröse Elektrode 6 abgeführt. Die Gaszufuhr erfolgt entweder über beide Enden des Behandlungsraumes 5 oder über ein Ende, wobei der Behandlungsraum 5 dann an dem zum Gaseintritt gegenüberliegenden Ende in geeigneter Weise verschlossen ist, damit dort kein unbehandeltes Gas austritt.

Für den erfindungsgemäßen Gebrauch ist es ferner unerheblich, welche Formgebung den Elektroden zugrunde gelegt wird. So ist es möglich, beide Elektrodenformen quadratisch, rechteckförmig oder anderweitig auszuformen oder auch verschiedene Formen zu kombinieren, wobei das beschriebene Prinzip beibehalten wird.

Für bestimmte Anwendungsfälle ist es vorteilhaft, das Abgas zusätzlich mit flüssigen oder gasförmigen Beimengungen zu versehen. Dazu können dem Behandlungsraum 5 und/oder dem Gasraum 7 geeignete Einlässe für die Beimischung von gasförmigen oder flüssigen Substanzen zum Abgas zugeordnet sein.

Von Vorteil kann es auch sein, wenn die Vorrichtung mit einer Kühlung ausgestattet ist. Dazu ist in einer nicht näher eingezeichneten Variante eines Ausführungsbeispiels das elektrisch leitende Material 3 als Rohr ausgebildet, durch welches ein geeignetes Kühlmittel strömt. Anstelle eines flüssigen oder gasförmigen Kühlmittels kann auch in geeigneter Weise ein Wärmerohr benutzt werden.

Die Längenausdehnung der Vorrichtung richtet sich nach der zu behandelnden Volumenmenge und Flußrate des Abgases, wobei für den erfindungsgemäßen Gebrauch nur wesentlich ist, daß die Länge so gewählt wird, daß die entstehende Fläche der porösen Elektrode größer als die Querschnittsfläche des Behandlungsraumes 5 ist, damit eine geeignete Beruhigung des Gasstromes erfolgt. Das ist bei Längen größer als der Dicke des Gasraumes bereits erfüllt, wobei vorzugsweise die Länge um einen Faktor von 10 und mehr über der Gasraumdicke liegt.

Die Gasraumdicke des Behandlungsraumes 5 entspricht dem Stand der Technik. Für die Wandstärke der porösen Elektrode 6 werden 0,5 mm bis 5 mm bevorzugt, wobei auch andere Dicken möglich sind. Der Porendurchmesser des porösen Materials liegt vorzugsweise im Bereich von 3µm bis 200 µm, es können aber auch andere Durchmesser gewählt werden. Es ist weiterhin möglich, vorbeschriebene Vorrichtungen mit mehreren strömungsmäßig parallel zu betreiben, um einen hohen Gasdurchsatz zu erreichen.

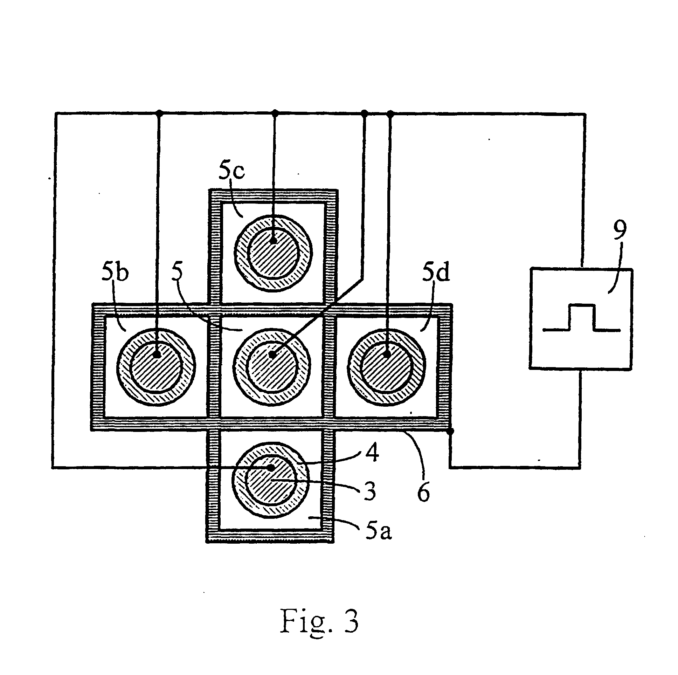

Der in den vorbeschriebenen Beispielen vorhandene Gasraum 7 kann vorteilhaft durch einen Reaktionsraum ersetzt sein, so daß in diesem eine weitere Plasmabehandlung ausgeführt werden kann. Die Fig. 3 zeigt ein entsprechendes Ausführungsbeispiel der für die Durchführung des erfindungsgemäßen Verfahrens verwendbaren Vorrichtung, bei der eine Plasmabehandlung mit mehreren Reaktionsräumen erfolgt. Dargestellt ist der Schnitt durch eine solche Vorrichtung. Bei dieser Anordnung ist die poröse Elektrode 6 als eine verbundene Wabenstruktur von fünf rechteckförmigen Wabenteilen in Form von rechteckförmigen hohlen Quadem ausgebildet, bei denen zwei aneinanderstoßende Seitenflächen eine gemeinsame Wand bilden. In diese Hohlquader sind isolierte Elektroden mit den Bestandteilen 3 und 4 eingebracht. In der Fig. 3 sind dabei koaxiale Ausführungen der isolierten Elektroden in Form von zylinderförmigen Stäben gezeigt. Zwischen den aus 3 und 4 bestehenden isolierten Elektroden und der mehrere Kammern bildenden porösen leitenden Elektrode 6 sind durch nicht näher eingezeichnete Abstandshalter mehrere Gasräume ausgebildet, die in diesem Fall verfahrensgemäß als Behandlungsräume (5a, 5b, 5c und 5d) dienen. Die Elektroden der Vorrichtung sind wiederum mit einer Wechselspannungsversorgung 9 verbunden.

In der Zeichnung nach Fig. 3 sind die isolierten Elektroden mit den Bestandteilen 3 und 4 nur an einem Wabenteil ausgewiesen, da die anderen gleichartig aufgebaut sind und sich dies entsprechend wiederholt. In der Ausführung nach Fig. 3 ist die Wabenstruktur der porösen Elektrode 6 so angeordnet, daß ein zentraler hohler Quader gebildet wird, an dessen Seitenflächen die vier benachbarten angrenzen.

Verfahrensgemäß wird das Abgas in den in der zentralen Wabe ausgebildeten Raum, der als Behandlungsraum 5 gestaltet ist, eingeleitet. Das Gas ist hier einer ersten Plasmabehandlung ausgesetzt und strömt durch die poröse Elektrodenwand in die vier benachbarten Waben mit ihren gleichfalls vorhandenen Behandlungsräumen 5a, 5b, 5c und 5d, in denen eine zweite Behandlung erfolgt. Das im zweiten Schritt behandelte Gas strömt durch den jeweiligen Behandlungsraum hindurch und über die anderen drei Wände nach außen, wo es über ein nicht näher eingezeichnetes Gehäuse und einen geeigneten Gasauslaß an die Umgebung abgegeben wird. Zur Strömungsführung ist der zentrale Behandlungsraum 5 an einem Ende verschlossen und das Gas strömt von dem anderen Ende ein oder das Gas strömt von beiden Enden ein und danach durch die Seitenwände in die benachbarten Behandlungsräume. Die benachbarten Behandlungsräume 5a, 5b,5c und 5d zur zweiten Behandlung können ihrerseits an beiden Enden verschlossen sein, so daß das Gas durch ihre anderen drei Wände abströmt. Es ist auch möglich, daß die Behandlungsräume 5a, 5b,5c und 5d an einem oder beiden Enden geöffnet sind, so daß das behandelte Gas dadurch abströmt.

Durch die nach Fig. 3 beschriebene Anordnung erfolgt eine Zweifachbehandlung des Abgases, aber ebenso eine vorteilhafte Mehrfachberuhigung des Gasstromes immer beim Eintritt in die poröse Elektrodenwand und beim Austritt aus dieser. Femer hat es sich dabei als Vorteil erwiesen, daß im zweiten Behandlungsabschnitt eine Absenkung hoher Druckspitzen erfolgt.

Es sind weitere Ausführungsformen realisierbar, ohne dadurch den Charakter der Erfindung zu verändern. So lassen sich zu vorbeschriebener Vorrichtung nach Fig. 3 um die fünf erfindungsgemäß aufgebauten Behandlungsräume weitere anordnen, in denen eine Behandlung erfolgt bzw. durch die das Gas nach außen tritt. Das Gas strömt dabei durch mehrere nebeneinander angeordnete Behandlungsräume und durch mehrere poröse Elektrodenwände.
Für größere Gasdurchsätze können wieder mehrere beschriebene Ausführungen strömungsmäßig parallel geschaltet sein. Es können weiterhin unterschiedliche Abfolgen zwischen mehreren einströmenden and ausströmenden Behandlungsräumen gewählt werden, indem wiederum eine Wabenstruktur ausgebildet ist und jede zweite Wabe als einströmender Behandlungsraum dient, während die jeweils benachbarten als ausströmende Behandlungsräume dienen. Von Zeile zu Zeile kann dieses Prinzip um eine Funktionseinheit verschoben sein.

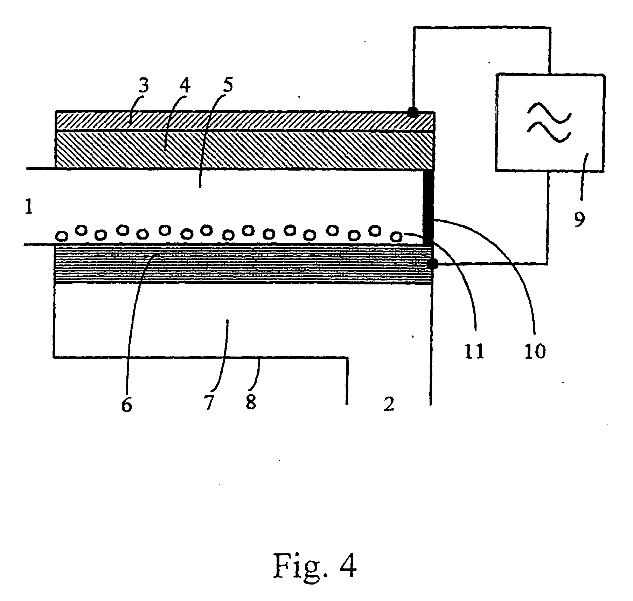

Die Fig. 4 verdeutlicht den prinzipiellen Aufbau einer für den eifindungsgemäßen bei mit Ruß beladenen Abgasen vorgesehenen Vorrichtung schematisch. Durch ein elektrisch leitendes Material 3 und einem darauf befindlichen Isolationsmaterial 4 ist eine isolierte Elektrode gebildet. Dieser gegenüber angeordnet ist eine poröse Elektrode 6, die vorzugsweise elektrisch leitfähig ist und beispielsweise aus reaktionsverbundenem Siliziumkarbid besteht. Zwischen diesen Elektroden ist ein Behandlungsraum 5 ausgebildet, in welchem bei Anlegen einer Wechselspannung an die Elektrode mit einer Wechselspannungsversorgung 9 eine Gasentladung betrieben werden kann. Die Vorrichtung wird von einem Gehäuse 8 begrenzt und besitzt einen Gaseinlaß 1, einen Gasauslaß 2 und einen Verschluß 10 an einem Ende des Behandlungsraumes 5. Zwischen Gehäuse 8 und der porösen Elektrode 6 ist ein Gasraum 7 zur Aufnahme und Weiterleitung des behandelten Gases in den Gasauslaß 2 ausgebildet.

Der Gasstrom wird durch die so gebildete Vorrichtung geleitet, insbesondere durch die poröse Elektrode 6. An dieser porösen Elektrode erfährt der Abgasstrom beim Durchtritt eine Beruhigung und es werden insbesondere die Rußpartikel 11 zurückgehalten. Bei Herbeiführen einer Gasentladung mit der Wechselspannungsversorgung 9 wird der Kohlenstoff im Plasma zur Reaktion gebracht, so daß dieser oxidiert. Der Betrieb der Gasentladung kann abhängig vom Beladungszustand der porösen Elektrode mit Partikeln auch geregelt sein. Durch einen geeigneten Sensor, beispielsweise einen Druckmesser, wird der Zustand ermittelt und das Zu- oder Abschalten der Wechselspannungsversorgung 9 entsprechend ausgelöst bzw. das Tastverhältnis der Wechselspannung verändert. Im Fall, daß der Abgasstrom nicht ausreichend Sauerstoff enthält oder der Sauerstoffanteil aus den Zersetzungsprodukten zu gering ist, kann dem Abgasstrom auch Umgebungsluft beigegeben werden, indem dem Gaseinlaß 1 eine geeignete Einrichtung für Beimischungen zugeordnet wird.

An Stelle der aus einem elektrisch leitfähigen Material ausgebildeten porösen Elektrode 6 kann aber auch ein elektrisch nicht leitfähiges Material verwendet werden. In diesem Fall muß die poröse Elektrode 6 als eine isolierte Elektrodenkonfiguration ausgebildet sein, die sich aus zwei Bestandteilen zusammensetzt. Dabei kann auch die Elektrodenkonfiguration der isolierten Elektrode, bestehend aus 3 und 4, gleichartig wie die andere Elektrode aufgebaut sein, da die Entladung durch den porösen nicht leitenden Teil der Elektroden begrenzt wird.

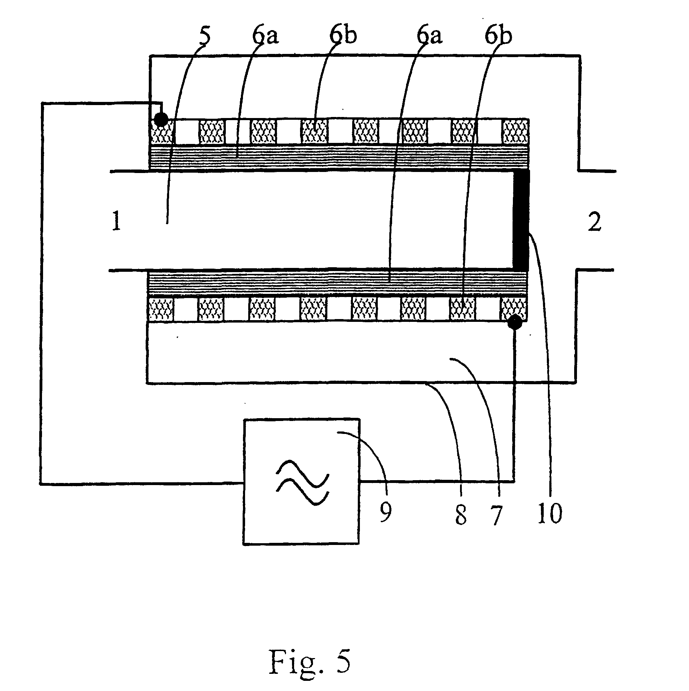

Eine solcherart aufgebaute Vorrichtung ist in der Fig. 5 schematisch veranschaulicht. Die poröse Elektrode besteht aus einer elektrisch nicht leitenden Schicht 6a und einem Geflecht eines elektrisch leitenden Materials 6b. Das elektrisch leitende Material 6b kann auch siebförmig aufgebaut sein oder anderweitig mit Öffnungen versehen sein. Wichtig ist nur, daß der Gasdurchtritt gewährleistet ist. Die in diesem Beispiel gleichartig aufgebauten Elektroden sind gegenüberliegend angeordnet und bilden dazwischen den Behandlungsraum 5 aus, wobei die elektrisch nicht leitende Schicht 6a auf der Seite des Behandlungsraumes 5 angeordnet ist und das leitende Material 6b auf der Seite des Gasraumes 7. Auf diese Art ist eine dielektrisch behinderte Enladungskonfiguration mit zwei gleichartigen isolierten Elektroden ausgebildet, durch die zuvor behandeltes Abgas aus dem Behandlungsraum 5 in den durch ein Gehäuse 8 gebildeten Gasraum 7 strömen kann und über einen Gasauslaß 2 in die Umgebungsatmosphäre.

Die zuvor beschriebene zweiteilige Elektrode kann auch aus einer porösen elektrisch nicht leitenden Schicht 6a und einem elektrisch leitenden Material 6b mit gleichfalls porösen Eigenschaften aufgebaut sein, ohne daß der Charakter der Erfindung geändert ist. So können die verschiedenen Bestandteile 6a und 6b der porösen Elektrode beispielsweise unterschiedlich dotiertes SiC sein.

Bei Benutzung einer porösen Elektrode, die als eine isolierte Elektrodenkonfiguration ausgebildet ist, kann in einer anderen Ausführung auch auf das Isolationsmaterial 4 verzichtet werden, so daß die dielektrisch behinderte Entladung zwischen dem elektrisch leitenden Material 3 und der aus den Bestandteilen 6a und 6b gebildeten porösen Elektrode ausgebildet ist.

Zur Unterstützung von plasmachemischen Reaktionsabläufen kann auch die Temperatur in eine Optimierung der Reaktionsabläufe einbezogen werden, indem eine Vorrichtung mit einer geeigneten Kühlung ausgestattet wird oder umgekehrt mit einer Einrichtung zur Aufheizung.

Bei der Formgebung des Behandlungsraumes können sich planare oder koaxiale Formen von Elektroden gegenüberstehen oder es können auch beide Formen vorteilhaft kombiniert werden.

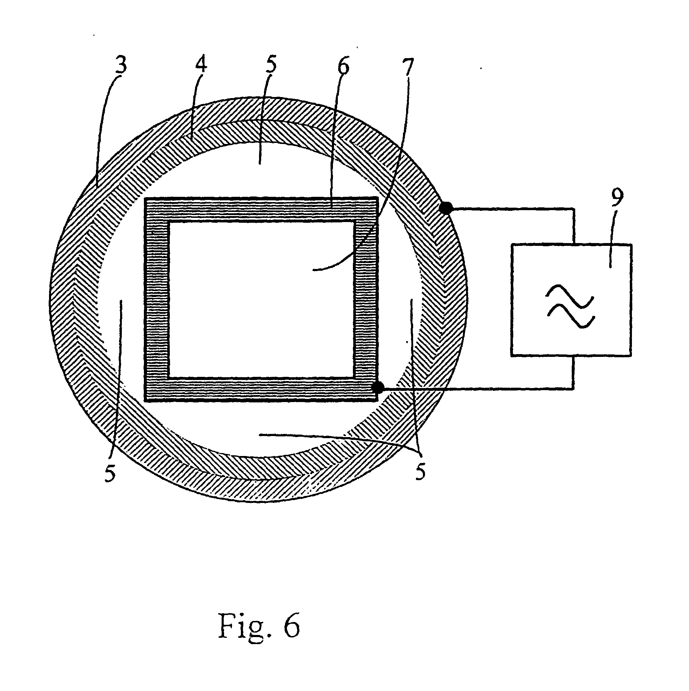

In Fig. 6 ist der Schnitt durch eine weitere Ausformung der Vorrichtung gezeigt. Darin bilden ein elektrisch leitendes Material 3 und eine Isolationsmaterial 4 zusammen eine koaxial isolierte Elektrode. In diese als Rohr ausgebildete isolierte Elektrode ist die poröse Elektrode 6, die als Hohlquader geformt ist, eingebracht.

Durch beide Elektroden ist wieder ein Behandlungsraum 5 gebildet, der in diesem Beispiel viergeteilt ist und dessen Gasraumdicke entsprechend der Koaxialform und der planaren Form der beiden Elektroden variiert. Durch diese spezielle Elektrodenausformung wird einerseits erreicht, daß die Spannungen zum Zünden der Entladung niedriger liegen, da auch sehr kleine Gasraumdicken vorhanden sind, die einen kleineren Spannungsbedarf haben und nach dem Zünden die anderen Entladungsstrecken in der Zündung durch sogenannte Konditionierungseffekte unterstützen. Andererseits ist die Spaltweite des Entladungsraumes an vielen Stellen weit genug, um eine Verstopfung des viergeteilten Behandlungsraumes 5 zu vermeiden. Die dargestellte Ausführungsvariante benötigt keine Abstandshalter zwischen den Elektroden, da der Quader sich in das Rohr einpaßt. Im Fall, daß der Quader kleiner ist, sind wieder geeignete Abstandshalter zwischen den Elektroden anzubringen.

Die Zufuhr des zu behandelnden Gases erfolgt über ein Ende oder beide Enden des Behandlungsraumes 5 durch eine hier nicht dargestellte geeignete Gaszufuhr. Im Fall der Gaszufuhr über ein Ende ist das andere Ende wieder in geeigneter Weise verschlossen. Das Gas strömt nach der Behandlung durch die poröse Elektrode 6 in den Gasraum 7 und wird von dort über einen entsprechenden Gasauslaß an die Umgebung abgegeben.

Die Ausführungsvariante nach Fig. 6 kann wieder mit den zuvor beschriebenen Merkmalen von Ausführungsvarianten und/oder den genannten Ergänzungen abgewandelt sein.

Als weitere vorteilhafte Ausführung (hier nicht näher in einer Figur dargestellt) kann Gasraum 7 der vorgeschriebenen Beispiele so gestaltet sein, daß auch in diesem eine Plasmabehandlung ausgeführt werden kann, so daß dadurch eine Nachbehandlung des zuvor behandelten Abgases erfolgt. Zu diesem Zweck ist in den Gasraum 7 eine isolierte Elektrodenkonfiguration einzubringen und mit geeigneten Abstandshaltem zu fixieren. Zwischen dieser isolierten Elektrode und der porösen Elektrode 6 ist dann ein weiterer Behandlungsraum ausgebildet. Zusammen mit dem ersten Behandlungsraum 5, der in den oberen Beispielen beschrieben wurde, ist somit eine Mehrfachbehandlung des Abgases möglich.

## Patentansprüche

1. Vorrichtung zur Zersetzung von Schadstoffen in Abgasen von Verbrennungsprozessen, umfassend mindestens einen Behandlungsraum (5), welcher nach dem Prinzip der dielektrisch behinderten Entladung arbeitet,
- wenigstens zwei Elektroden aufweist und
- einen Gaseinlaß (1) besitzt, mittels dessen parallel zu den Elektroden zu behandelndes Abgas in den von den Elektroden gebildeten Zwischenraum geleitet werden kann,
- wobei eine der Elektroden
• den Behandlungsraum (5) von einem Gasraum (7) trennt sowie
• porös und gasdurchlässig ausgebildet ist, so daß der Austritt aus dem Behandlungsraum (5) in den Gasraum (7) durch diese Elektrode erfolgen kann,
• entweder selbst leitfähig ist oder aus einem porösen nichtleitfähigen Bestandteil und einem leitfähigen Bestandteil besteht,
• für Rußpartikel als Filter wirkend ausgebildet ist und
• eine Fläche besitzt, die größer als die Querschnittsfläche des Behandlungsraumes (5) ist.

2. Vorrichtung nach Anspruch 1, **dadurch gekennzeichnet, daß** die poröse elektrisch leitfähige Elektrode (6) aus reaktionsverbundenem SiC besteht.

3. Vorrichtung nach Anspruch 1, **dadurch gekennzeichnet, daß** die poröse Elektrode ein Geflecht eines elektrisch leitenden Materials (6b) aufweist.

4. Vorrichtung nach Anspruch 1, **dadurch gekennzeichnet, daß** die poröse Elektrode (6, 6a, 6b) mit einem Material infiltriert ist, das katalytische Eigenschaften aufweist.

5. Vorrichtung nach Anspruch 1, **dadurch gekennzeichnet, daß** das Volumen des Gasraumes (7) größer als das des Behandlungsraumes (5) ist.

6. Verfahren zur Zersetzung von Schadstoffen in Abgasen von Verbrennungsprozessen unter Verwendung einer Vorrichtung nach Anspruch 1, wobei das Abgas längs einer porösen Elektrode (6, 6a, 6b) in einen Behandlungsraum (5) einströmt, in diesem durch eine geeignete Wechselspannungsversorgung (9) einer Plasmabehandlung unterzogen wird und durch die poröse Elektrode (6, 6a, 6b) in einen Gasraum (7) oder in einen weiteren Behandlungsraum weiterströmt.

7. Verfahren nach Anspruch 6, **dadurch gekennzeichnet, daß** das Abgas rußhaltige schadstoffe enthält und durch mindestens einen Behandlungsraum (5) geleitet wird, in dem die Rußpartikel (11) durch mindestens eine poröse Elektrode (6, 6a, 6b) aus dem Abgas ausgefiltert und durch ein Plasma zur Reaktion gebracht werden.

8. Verfahren nach Anspruch 7, **dadurch gekennzeichnet, daß** das Plasma in Abhängigkeit von der Partikelbeladung zu- oder abgeschaltet wird, so daß eine Mindestbeladung von Partikeln erhalten bleibt.

9. Verfahren nach Anspruch 6, **dadurch gekennzeichnet, daß** im abströmseitigen Gasraum (7) ein Unterdruck gegenüber dem Behandlungsraum (5) hergestellt wird.

10. Verfahren nach Ansprüchen 6 und 7, **dadurch gekennzeichnet, daß** Sauerstoff aus beigemischter inft für die Reaktionen genutzt wird und/oder die Reaktionen durch thermische Mittel wie Kühlung und Aufheizung unterstützt werden.

## Claims

1. A device for decomposing harmful substances contained in combustion gases of combustion processes, comprising at least one treatment chamber (5), which works in accordance with the principle of dielectrically impeded discharge,
- comprises at least two electrodes and
- has a gas inlet (1), by means of which combustion gas to be treated can be conveyed parallel to the electrodes into the space formed by the electrodes,
- wherein one of the electrodes
o separates the treatment chamber (5) from a gas chamber (7) and also
o has a porous and gas-permeable construction, so that the exit from the treatment chamber (5) into the gas chamber (7) can take place through this electrode,
o is either conductive itself or consists of a porous, non-conductive component and a conductive component,
o is constructed acting as a filter for soot particles and
o has an area which is larger than the cross-sectional area of the treatment chamber (5).

2. A device according to Claim 1,
**characterised in that** the porous, electrically conductive electrode (6) is made from reaction-associated SiC.

3. A device according to Claim 1,
**characterised in that** the porous electrode comprises a braiding of an electrically conductive material (6b).

4. A device according to Claim 1,
**characterised in that** the porous electrode (6, 6a, 6b) is infiltrated with a material having catalytic properties.

5. A device according to Claim 1,
**characterised in that** the volume of the gas chamber (7) is larger than that of the treatment chamber (5).

6. A process for decomposing harmful substances contained in combustion gases of combustion processes using a device according to Claim 1, whereby the combustion gas flows along a porous electrode (6, 6a, 6b) into a treatment chamber (5), in said treatment chamber is subjected to a plasma treatment by a suitable alternating voltage supply (9) and flows on through the porous electrode (6, 6a, 6b) into a gas chamber (7) or into another treatment chamber.

7. A process according to Claim 6,
**characterised in that** the combustion gas contains harmful substances containing soot and is conveyed through at least one treatment chamber (5) in which the soot particles (11) are filtered out of the combustion gas by at least one porous electrode (6, 6a, 6b) and are made to react by a plasma.

8. A method according to Claim 7,
**characterised in that** the plasma is switched on or off as a function of the particle charging so that a minimum charging of particles is retained.

9. A process according to Claim 6,
**characterised in that** a negative pressure is produced in the outlet-side gas chamber (7) in comparison with the treatment chamber (5).

10. A process according to Claims 6 and 7,
**characterised in that** oxygen from added air is used for the reactions and/or the reactions are supported by thermal means such as cooling and heating.

## Revendications

1. Dispositif pour décomposer des substances nocives dans des gaz d'échappement de processus de combustion, comprenant au moins une chambre de traitement (5), qui fonctionne selon le principe de la décharge gênée diélectriquement,
- comporte au moins deux électrodes, et
- possède une entrée (1) de gaz, au moyen de laquelle un gaz d'échappement à traiter peut être dirigé parallèlement aux électrodes dans l'espace intercalaire formé par les électrodes,
- dans lequel l'une des électrodes,
• sépare la chambre de traitement (5) d'une chambre à gaz (7), et
• est réalisée de manière à être poreuse et perméable aux gaz de sorte que la sortie depuis la chambre de traitement (5) dans la chambre à gaz (7) peut s'effectuer à travers cette électrode,
• est en soi conductrice ou est constituée par un composant poreux non conducteur et par un composant conducteur,
• est agencée de manière à agir en tant que filtre pour les particules de suie, et
• possède une surface qui est plus grande que la surface en coupe transversale de la chambre de traitement (5).

2. Dispositif selon la revendication 1, **caractérisé en ce que** l'électrode poreuse électriquement conductrice (6) est constituée par du SiC combiné par réaction.

3. Dispositif selon la revendication 1, **caractérisé en ce que** l'électrode poreuse est un treillis formé d'un matériau électriquement conducteur (6b).

4. Dispositif selon la revendication 1, **caractérisé en ce que** l'électrode poreuse (6, 6a, 6b) est infiltrée avec un matériau qui possède des caractéristiques catalytiques.

5. Dispositif selon la revendication 1, **caractérisé en ce que** le volume de la chambre à gaz (7) est supérieur à celui de la chambre de traitement (5).

6. Procédé pour décomposer des substances nocives dans des gaz d'échappement de processus de combustion en utilisant un dispositif selon la revendication 1, selon lequel le gaz d'échappement pénètre le long d'une électrode poreuse (6, 6a, 6b) dans une chambre de traitement (5), est soumis dans cette dernière à un traitement par plasma grâce à une alimentation appropriée en tension alternative (9), et continue à s'écouler pour pénétrer, en traversant l'électrode poreuse (6, 6a, 6b), dans une chambre à gaz (7) ou dans une chambre de traitement.

7. Procédé selon la revendication 6, **caractérisé en ce que** le gaz d'échappement contient des substances nocives contenant de la suie et est dirigé à travers au moins une chambre de traitement (5), dans laquelle les particules de suie (11) sont séparées par filtrage du gaz d'échappement par au moins une électrode poreuse (6, 6a, 6b) et sont amenées à réagir à l'aide d'un plasma.

8. Procédé selon la revendication 7, **caractérisé en ce que** le plasma est appliqué ou supprimé en fonction de la charge en particules, de sorte qu'une charge minimale de particules est conservée.

9. Procédé selon la revendication 6, **caractérisé en ce qu'**une dépression par rapport à la chambre de traitement (5) est établie dans la chambre à gaz (7) située côté aval.

10. Procédé selon les revendications 6 et 7, **caractérisé en ce que** l'oxygène sortant de l'air ajouté au mélange est utilisé pour les réactions et/ou **en ce que** les réactions sont soutenues par des moyens thermiques tels qu'un refroidissement et un chauffage.
